# FASCICULE DE BREVET EUROPEEN

(11) **EP 1 279 809 B1**
(45) Date de publication et mention de la délivrance du brevet: **27.12.2006**
(21) Numéro de dépôt: 02291710.8
(22) Date de dépôt: 08.07.2002
(51) Int. Cl.: F02B 75/00, F02B 23/02

(54) **Procédé de contrôle de l'injection d'un carburant pour moteur à combustion interne à injection directe**
Verfahren zur Steuerung der Brennstoffeinspritzung einer Brennkraftmaschine mit Direkteinspritzung
Method for controlling the fuel injection of a direct injected combustion engine

(30) Priorité: 27.07.2001 FR 0110149
(43) Date de publication de la demande: 29.01.2003
(73) Titulaire: Institut Français du Pétrole, 92852 Rueil-Malmaison Cedex (FR)
(72) Inventeur: Walter, Bruno, 92250 La Garenne Colombes (FR); Gatellier, Bertrand, 78380 Bougival (FR)

(56) Documents cités:
- EP-A- 0 849 448
- DE-A- 19 908 454
- US-A- 5 363 820
- US-A- 6 053 144
- PATENT ABSTRACTS OF JAPAN vol. 018, no. 579 (M-1698), 7 novembre 1994 (1994-11-07) & JP 06 213030 A (TOYOTA MOTOR CORP), 2 août 1994 (1994-08-02)
- PATENT ABSTRACTS OF JAPAN vol. 018, no. 512 (M-1679), 27 septembre 1994 (1994-09-27) & JP 06 173737 A (TOYOTA MOTOR CORP), 21 juin 1994 (1994-06-21)
- PATENT ABSTRACTS OF JAPAN vol. 012, no. 195 (M-705), 7 juin 1988 (1988-06-07) & JP 63 001710 A (NIPPON CLEAN ENGINE LAB CO LTD), 6 janvier 1988 (1988-01-06)

## Description

La présente invention se rapporte à un procédé de contrôle de l'injection d'un carburant pour un moteur à combustion interne à injection directe de carburant.

Elle porte plus particulièrement sur un procédé d'injection de carburant permettant d'obtenir un mélange homogène du carburant injecté avec de l'air ou avec un mélange d'air et de gaz d'échappement recirculés.

Les développements des moteurs à combustion interne doivent répondre aux demandes de réduction des émissions de polluants, de consommation de carburant, d'augmentation du couple et de la puissance spécifique ainsi que de la réduction du bruit de combustion, tout en restant compatible avec les critères de tenue en endurance.

Pour ce faire, il est possible de changer certains paramètres du système d'injection (tels que la pression, les lois de commande, etc...) ou des jets de carburant, comme l'angle de nappe que forme ces jets au nez de l'injecteur.

Cependant, lorsque l'on améliore un de ces paramètres cela entraîne une dégradation d'un autre paramètre.

Ainsi, c'est le cas par exemple pour l'injection du carburant liquide dans la chambre de combustion où ce carburant est injecté avec un angle de nappe déterminé par le type d'injecteur utilisé.

Une modification de cet angle peut conduire à une projection de carburant sur la paroi du cylindre, projection qui entraîne une dégradation de la tenue du lubrifiant présent sur cette paroi ainsi que la création de suies.

Ceci a pour inconvénient d'entraîner une augmentation des émissions de polluants et/ou une réduction des performances à pleine charge et/ou une augmentation du bruit.

Comme décrit dans les demandes de brevets EP 849448 ou EP 589178, le carburant est introduit dans la chambre de combustion par un injecteur placé dans l'axe de chaque cylindre avec un angle de nappe très large de l'ordre de 140 à 160°.

Par cet injecteur, les jets de carburant sont émis en se vaporisant sans jamais toucher la paroi du cylindre et donc sans affecter sa lubrification.

Pour que cet effet se produise, il faut bien entendu que le piston soit assez proche de son point mort haut (PMH) et on ne dispose de ce fait que d'une faible latitude dans le choix des instants d'injection du carburant.

Ceci est un inconvénient non négligeable, car il est connu aussi que des injections de carburant précoces et/ou tardives offrent de nombreux avantages.

Par exemple, une injection pilote avant le point mort haut et l'injection principale, permet de réduire le bruit de combustion.

De plus, comme cela est connu, la régénération des filtres à particules, déclenchée par une augmentation de la température à l'échappement, nécessite une injection de carburant peu de temps avant l'ouverture des soupapes d'échappement.

Une injection de carburant, lors de la détente ou encore au cours de la phase échappement, peut être également utile pour obtenir les conditions favorables à l'échappement pour régénérer les pièges à NOx.

En outre, pour obtenir une homogénéité du mélange carburé, il peut être souhaité d'injecter du carburant précocement.

Comme les injecteurs utilisés généralement ont un angle de nappe compris entre 140° et 160°, la plage de réglage de ces injections est réduite pour limiter les problèmes de dilution du lubrifiant par du carburant.

La présente invention se propose de remédier aux inconvénients mentionnés ci-dessus grâce à un procédé d'injection de carburant qui permette d'utiliser des conditions d'injection très variées.

A cet effet, un procédé de contrôle de l'injection d'un carburant pour un moteur à combustion à injection directe comprenant au moins un injecteur à angle de nappe a₁ de jets de carburant, un cylindre, une tête de cylindre, un piston coulissant dans ce cylindre et relié à un vilebrequin, et une chambre de combustion délimitée par la paroi du cylindre, la tête de cylindre et par la face supérieure du piston, est caractérisé en ce qu'il consiste :
- à déterminer une position limite basse du piston au-dessous de laquelle la paroi du cylindre est susceptible d'être mouillée par les jets de carburant issus de l'injecteur;
- à déterminer la position effective de ce piston ;
- à situer cette position effective du piston par rapport à la position limite basse ;
- à adapter les paramètres d'injection du carburant en fonction de la position effective du piston par rapport à la position limite basse.

Avantageusement, le procédé peut consister à adapter les paramètres d'injection pour limiter la pénétration des jets de carburant dans la chambre de combustion pour toutes positions du piston comprises entre sa position limite basse et sa position la plus éloignée de la tête de cylindre.

De manière préférentielle, il peut consister à injecter une quantité déterminée de carburant sous très haute pression, de préférence supérieure à 1000 bars.

Ce procédé peut consister à injecter une quantité déterminée de carburant dans un temps très court.

Il peut consister à répéter l'injection de quantité déterminée de carburant jusqu'à obtenir la quantité totale de carburant à injecter.

La quantité déterminée de carburant peut ne pas dépasser 25 % de la quantité totale du carburant à injecter.

De manière avantageuse, il peut consister à déterminer la position limite basse du piston grâce à la relation D x tan(a₁/2), où D est la distance radiale entre le point d'origine des jets de carburant et la paroi du cylindre.

Le procédé peut consister à utiliser des paramètres d'injection pour injecter le carburant de manière conventionnelle pour toutes positions du piston comprises entre sa position limite basse et sa position la plus proche de la tête de cylindre.

D'autres caractéristiques et avantages du procédé selon l'invention vont apparaître à la lecture de la description ci-après, donnée à titre d'exemple, et à laquelle sont annexés des dessins où :
- la figure 1 montre schématiquement un moteur à combustion interne utilisant le procédé selon l'invention ;
- la figure 2 illustre le débattement angulaire du vilebrequin relié au piston du moteur utilisant le procédé selon l'invention.

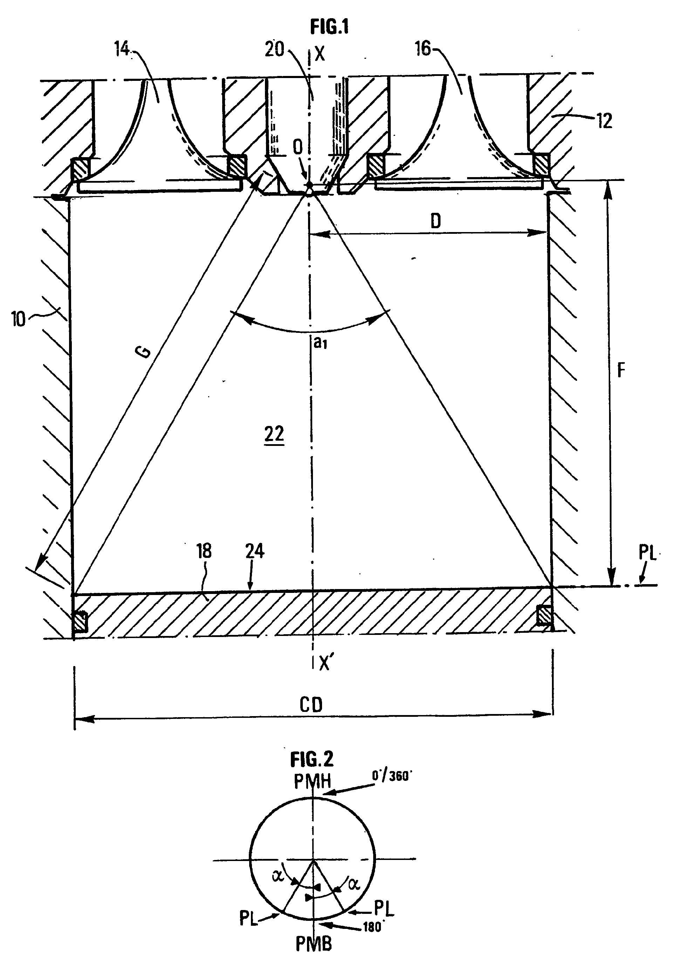

En se référant à la figure 1, un moteur à combustion interne à injection directe de carburant, par exemple de type diesel, comprend au moins un cylindre 10 d'axe XX' et de diamètre CD, une tête de cylindre 12 fermant le cylindre en partie haute, des moyens d'admission d'air et des moyens d'échappement des gaz brûlés, ici respectivement une ou plusieurs soupapes d'admission 14, une ou plusieurs soupapes d'échappement 16, un piston 18 coulissant dans le cylindre 10 et relié à un vilebrequin (non représenté), et un injecteur de carburant 20, de préférence disposé dans l'axe XX' du cylindre, à partir duquel est issue une nappe 22 de jets de carburant, qui, dans l'exemple montré, a un axe général confondu avec celui du cylindre 10.

Bien entendu, il peut être prévu que l'injecteur ne soit pas disposé dans l'axe XX', mais dans ce cas l'axe général de la nappe de jets de carburant issue de cet injecteur de carburant est pour le moins parallèle à cet axe XX'.

Plus précisément, l'injecteur de carburant est de type à faible angle de nappe a₁ et on choisit un angle de nappe a₁ au plus de 120° et préférentiellement entre 40° et 100°.

De manière connue, la chambre de combustion est délimitée d'un côté par la tête de cylindre 12, du côté opposé par la face supérieure 24 du piston 18 et latéralement par la paroi 26 du cylindre10.

En fonction de l'angle de nappe a₁ choisi, il est déterminé une position limite basse PL du piston 18 selon laquelle les jets de carburant ne touchent pas la paroi 26 du cylindre 10 entre cette position et la position haute dudit piston.

Cette position limite basse est déterminée par la distance F entre le point d'origine O des jets de carburant issus du nez de l'injecteur 20 et la face supérieure 24 du piston et est égale à D × tan(a₁/2), où D est la distance radiale entre le point O d'origine de jets de carburant et la paroi 26 du cylindre 10 la plus proche de ce point.

Dans l'exemple décrit la distance D est égale à CD/2, où CD est le diamètre du cylindre.

Grâce à un calcul géométrique du système bielle-manivelle qui est habituellement disposé entre le piston et le vilebrequin, la distance F permet de déterminer une position angulaire de vilebrequin, comme mieux visible sur la figure 2, qui va donner un angle α de vilebrequin à partir du point mort bas (PMB).

Grâce à la détermination de cet angle α, il peut être spécifié que la paroi 26 du cylindre 10 n'est jamais mouillée par le carburant pour toutes les positions du piston 18 comprises entre 0° et 180°-α et entre 180° +α et 360° d'angle de vilebrequin, où 0° et 360° représente l'angle du vilebrequin au point mort haut (PMH) correspondant à une position haute du piston, 180° le point mort bas (PMB) correspondant à la position basse du piston.

Le point mort haut (PMH) et le point mort bas (PMB) correspondent à des phases de fonctionnement du moteur où il est souhaitable d'injecter du carburant, notamment en phase d'admission, de compression ou d'échappement.

Ainsi, il sera déterminé deux types de zones angulaires du débattement du vilebrequin qui correspondent chacune à une course du piston, un premier type, dénommé zones autorisées, entre 0° et 180°-α ou entre 180+α et 360°, et un deuxième type, désigné zone restrictive, correspondant à un débattement angulaire du vilebrequin entre 180°-α et 180° +α.

Rapporté à la course du piston, cela signifie que, dans la zone autorisée, la paroi 26 ne sera jamais mouillée par le carburant pour la position du piston 18 comprise entre sa position limite base et sa position haute (celle la plus proche de la tête de cylindre 12).

Pour la zone restrictive, le piston se situera donc entre sa position limite basse et sa position la plus éloignée de la tête de cylindre.

En fonction du type de zone dans laquelle se trouve le piston, il est prévu d'adapter les paramètres d'injection du carburant de manière à l'injecter, soit de manière conventionnelle pour les zones autorisées, soit en utilisant des réglages spécifiques d'injection de carburant pour la zone restrictive.

Plus précisément, les réglages de l'injection dans la zone restrictive sont tels qu'il est prévu de limiter la pénétration des jets de carburant dans la chambre de combustion.

Pour cela, les réglages de l'injection dans la zone restrictive sont prévus pour que la pénétration des jets de carburant, considérés aux bords extrêmes latéraux de la nappe, soit inférieure à la distance séparant le point d'origine O des jets de carburant jusqu'à la paroi 26 du cylindre 10.

Cette distance, indiquée par la lettre G sur la figure 1, est égale à D x sin(a₁/2), où D est une distance telle que définie précédemment et correspond, dans l'exemple décrit, à CD/2

Pour limiter cette pénétration, il est prévu d'injecter sous haute pression, supérieure ou égale à 1000 bars, une quantité limitée de carburant, représentant au maximum 25% de la quantité totale du carburant injectée, avec un temps d'injection très court, ce qui permet à ce carburant de se vaporiser dans l'air ou dans le mélange d'air et de gaz d'échappement recirculés et cela avant qu'il n'atteigne la paroi 26 du cylindre.

Bien entendu, l'injection de cette quantité limitée de carburant se répètera plusieurs fois et plus précisément, dans l'exemple décrit, se fera par quatre injections de carburant équivalentes à 25% de la quantité totale du carburant injectée.

Grâce au fait que l'injection de carburant se réalise sous très haute pression, ceci permet de réaliser de très fines gouttelettes de carburant qui forment un nuage qui se vaporise, dans l'air ou dans le mélange d'air et de gaz d'échappement recirculés, plus facilement qu'un jet de liquide.

Bien entendu, pour favoriser la création de ces gouttelettes, il peut être associé à ces réglages de pression d'injection et de temps d'injection d'autres paramètres, tels que le diamètre des trous d'injection de l'injecteur qui doit être faible de l'ordre de 100 µm.

En pratique, les moyens de commande du système d'injection que comportent habituellement un moteur, tel qu'un calculateur moteur, contient dans sa base de données, la position limite basse PL du piston 18 et l'angle de vilebrequin α qui correspond à cette position limite basse.

Ce calculateur contient également des paramètres d'injection de carburant en fonction des zones autorisées (entre 0° et 180°-α ou entre 180+α et 360° d'angle de vilebrequin) et en fonction de la zone restrictive (entre 180°-α et 180° +α d'angle de vilebrequin).

Lorsque le calculateur moteur est sur le point de donner l'ordre d'injection à l'injecteur, ce calculateur détermine au préalable la position effective du piston 18 dans la chambre de combustion.

Cette position du piston, par exemple, sera déduite grâce à un capteur de position angulaire prévu sur le vilebrequin qui détermine l'angle de vilebrequin à partir du point mort haut.

Une fois déterminé l'angle du vilebrequin (et corollairement la position réelle du piston), le calculateur vérifie si cet angle est contenu dans les zones autorisées ou dans la zone restrictive.

Si cet angle est dans une des zones autorisées, ce calculateur donnera des ordres d'injection du carburant au système d'injection que comporte le moteur de manière à ce que cela corresponde à un processus d'injection conventionnel.

Si cet angle est compris dans la zone restrictive, le calculateur fera en sorte de modifier les paramètres d'injection, comme décrit précédemment, pour limiter la pénétration du jet de carburant dans la chambre de combustion.

Ainsi, grâce à l'invention, il est possible d'obtenir une grande latitude dans le choix des instants d'injection, car le procédé tel que défini permettra d'obtenir une nappe de jets de carburant qui ne mouillera pas les parois du cylindre.

La présente invention n'est pas limitée à l'exemple décrit ci-dessus mais englobe toutes variantes.

Elle englobe notamment un procédé d'injection de carburant de type essence permettant d'obtenir un mélange homogène avec de l'air ou avec un mélange d'air et de gaz d'échappement recirculés.

## Revendications

1. Procédé de contrôle de l'injection d'un carburant pour un moteur à combustion à injection directe comprenant au moins un injecteur (20) à angle de nappe (a₁) de jets de carburant, un cylindre (10), une tête de cylindre (12), un piston (18) coulissant dans ce cylindre et relié à un vilebrequin et une chambre de combustion délimitée par la paroi (26) du cylindre, la tête de cylindre (12) et par la face supérieure (24) du piston (18), **caractérisé en ce qu**'il consiste :
- à déterminer une position limite basse (PL) du piston (18) au-dessous de laquelle la paroi (26) du cylindre est susceptible d'être mouillée par les jets de carburant issus de l'injecteur;
- à déterminer la position effective de ce piston ;
- à situer cette position effective du piston par rapport à la position limite basse ;
- à adapter les paramètres d'injection du carburant en fonction de la position effective du piston par rapport à la position limite basse.

2. Procédé selon la revendication 1, **caractérisée en ce qu**'il consiste à adapter les paramètres d'injection pour limiter la pénétration des jets de carburant dans la chambre de combustion pour toutes positions du piston (18) comprises entre sa position limite basse (PL) et sa position la plus éloignée de la tête de cylindre (12).

3. Procédé selon la revendication 2, **caractérisée en ce qu**'il consiste à injecter une quantité déterminée de carburant sous très haute pression.

4. Procédé selon la revendication 3, **caractérisée en ce qu**'il consiste à injecter une quantité déterminée de carburant sous une pression supérieure à 1000 bars.

5. Procédé selon la revendication 2 ou 3, **caractérisée en ce qu**'il consiste à injecter une quantité déterminée de carburant dans un temps très court.

6. Procédé selon l'une des revendications 3 à 5, **caractérisée en ce qu**'il consiste à répéter l'injection de quantité déterminée de carburant jusqu'à obtenir la quantité totale de carburant à injecter.

7. Procédé selon l'une des revendications 3 à 6, **caractérisée en ce qu**'il consiste à injecter une quantité déterminée ne dépassant pas 25 % de la quantité totale du carburant à injecter.

8. Procédé selon la revendication 1, **caractérisé en ce qu**'il consiste à déterminer la position limite basse (PL) du piston grâce à la relation D x tan(a₁/2), où D est la distance radiale entre le point d'origine O des jets de carburant et la paroi (26) du cylindre (10).

9. Procédé selon la revendication 1, **caractérisée en ce qu**'il consiste à utiliser des paramètres d'injection pour injecter le carburant de manière conventionnelle pour toutes positions du piston (18) comprises entre sa position limite basse (PL) et sa position la plus proche de la tête de cylindre (12).

## Claims

1. A method for controlling the injection of a fuel for a direct injection combustion engine including at least one injector (20) with a fuel jet nappe angle (a₁), a cylinder (10), a cylinder head (12), a piston (18) sliding in this cylinder and linked to a crankshaft, and a combustion chamber defined by the wall (26) of the cylinder, the cylinder head (12) and by the upper face (24) of the piston (18), **characterised in that** it consists in:
- determining a low limit position (PL) of the piston (18) below which the cylinder wall (26) may be wetted by the fuel jets coming out of the injector;
- determining the effective position of this piston;
- locating this effective position of the piston with respect to the low limit position;
- adapting the fuel injection parameters depending on the effective position of the piston with respect to the low limit position.

2. The method according to Claim 1, **characterised in that** it consists in adapting the injection parameters to limit ingress of the fuel jets into the combustion chamber for all of the positions of the piston (18) between its low limit position (PL) and its position furthest from the cylinder head (12).

3. The method according to Claim 2, **characterised in that** it consists in injecting a determined quantity of fuel at very high pressure.

4. The method according to Claim 3, **characterised In that** it consists In injecting a determined quantity of fuel at a pressure greater than 1000 bars.

5. The method according to Claim 2 or 3, **characterised in that it** consists in injecting a determined quantity of fuel over a very short time.

6. The method according to one of Claims 3 to 5, **characterised in that** it consists in repeating the injection of the determined quantity of fuel until the total quantity of fuel to be injected is achieved.

7. The method according to one of Claims 3 to 6, **characterised in that** it consists in injecting a determined quantity which is not greater than 25% of the total quantity of fuel to be injected.

8. The method according to Claim 1, **characterised in that** it consists in determining the low limit position (PL) of the piston by means of the relationship D x tan(a₁/2), where D is the radial distance between the point of origin O of the fuel jets and the wall (26) of the cylinder (10).

9. The method according to Claim 1, **characterised in that** it consists in using injection parameters to conventionally inject the fuel for all of the positions of the piston (18) between its low limit position (PL) and its position closest to the cylinder head (12).

## Patentansprüche

1. Verfahren zur Steuerung der Kraftstoffeinspritzung in einer Brennkraftmaschine mit Direkteinspritzung, umfassend mindestens eine Einspritzdüse (20) mit einem Winkel (a₁) des aufgefächerten Kraftstoffstrahls, einen Zylinder (10), einen Zylinderkopf (12), einen in diesem Zylinder verschieblich gelagerten Kolben (18), der mit einer Kurbelwelle verbunden ist, und einen Brennraum, der durch die Zylinderwand (26), den Zylinderkopf (12) und die Oberseite (24) des Kolbens (18) begrenzt ist, **dadurch gekennzeichnet, dass** es folgende Schritte umfasst:
- Ermitteln einer unteren Endposition (PL) des Kolbens (18), unterhalb welcher die Zylinderwand (26) empfindlich gegenüber dem Benetzt werden durch von der Einspritzdüse abgespritzten Kraftstoffstrahlen ist;
- Ermitteln der tatsächlichen Position dieses Kolbens;
- Orten dieser tatsächlichen Position des Kolbens im Verhältnis zur unteren Endposition;
- Anpassen der Einspritzparameter des Kraftstoffes in Abhängigkeit der tatsächlichen Position des Kolbens im Verhältnis zu der unteren Endposition.

2. Verfahren nach Anspruch 1, **dadurch gekennzeichnet, dass** es darin besteht, die Einspritzparameter anzupassen, um das Eindringen der Kraftstoffstrahlen in den Brennraum bei allen Positionen des Kolbens (18), die sich zwischen seiner unteren Endposition (PL) und seiner von dem Zylinderkopf (12) entferntesten Position befinden, zu begrenzen.

3. Verfahren nach Anspruch 2, **dadurch gekennzeichnet, dass** es darin besteht, eine bestimmte Menge an Kraftstoff unter sehr hohem Druck einzuspritzen.

4. Verfahren nach Anspruch 3, **dadurch gekennzeichnet, dass** es darin besteht, eine bestimmte Menge an Kraftstoff unter einem Druck, der höher ist als 1000 bar, einzuspritzen.

5. Verfahren nach Anspruch 2 oder 3, **dadurch gekennzeichnet, dass** es darin besteht, eine bestimmte Menge an Kraftstoff innerhalb einer sehr kurzen Zeit einzuspritzen.

6. Verfahren nach einem der Ansprüche 3 bis 5, **dadurch gekennzeichnet, dass** es darin besteht, die Einspritzung einer bestimmten Menge an Kraftstoff solange zu wiederholen, bis die Gesamtmenge des einzuspritzenden Kraftstoffs erreicht ist.

7. Verfahren nach einem der Ansprüche 3 bis 6, **dadurch gekennzeichnet, dass** es darin besteht, eine bestimmte Menge einzuspritzen, die 25 % der Gesamtmenge des einzuspritzenden Kraftstoffes nicht übersteigt.

8. Verfahren nach Anspruch 1, **dadurch gekennzeichnet, dass** es darin besteht, die untere Endposition (PL) des Kolbens anhand der Relation D x tan (a₁/2) zu ermitteln, wobei D die radiale Entfernung zwischen dem Ursprungspunkt O der Kraftstoffstrahlen und der Wand (26) des Zylinders (10) ist.

9. Verfahren nach Anspruch 1, **dadurch gekennzeichnet, dass** es darin besteht, Einspritzparameter zu verwenden, um den Kraftstoff auf herkömmliche Weise bei allen Positionen des Kolbens (18), die sich zwischen seiner unteren Endposition (PL) und seiner dem Zylinderkopf (12) nächstgelegenen Position befinden, einzuspritzen.
